Europäisches Patentamt

European Patent Office

Office européen des brevets

(19)

(11) **EP 0 754 489 A1**

(12) **EUROPEAN PATENT APPLICATION**

(43) Date of publication:
22.01.1997 Bulletin 1997/04

(51) Int. Cl.⁶: $B01F\ 3/04$, $B01F\ 15/00$, $B01J\ 19/18$

(21) Application number: 96111448.5

(22) Date of filing: 16.07.1996

(84) Designated Contracting States:
BE DE GB NL

(30) Priority: 20.07.1995 US 504721

(71) Applicant: AIR PRODUCTS AND CHEMICALS, INC.
Allentown, PA 18195-1501 (US)

(72) Inventor: Machado, Reinaldo Mario
Allentown, PA 18104 (US)

(74) Representative: Kador & Partner
Corneliusstrasse 15
80469 München (DE)

(54) **Method and apparatus to improve gas dispersion and gas mass transfer in a stirred tank reactor**

(57) A method and apparatus for improving mixing of liquid in a stirred tube reactor with gas contained or introduced into the head space above the liquid in the reactor. Draft tubes fixed to or an integral part of the shaft of an agitator system including a radial flow impeller rotated by the shaft used to stir the liquid extend from above the liquid to a location near the impeller so that rotation of the shaft and draft tube induces flow of gas from the head space through the tube for introduction into the liquid at or adjacent the impeller.

FIG. 4

EP 0 754 489 A1

## Description

FIELD OF THE INVENTION

The present invention pertains to the use of a stirred tank reactor to enhance gas-liquid chemical reactions.

BACKGROUND OF THE INVENTION

Stirred tank reactors are used to promote chemical reaction between a liquid phase and a gas phase contained in the reactor. Such reactors conventionally have a vertical shaft mounted for rotation about a vertical axis of the reactor. The shaft contains an impeller which can be at the bottom of the shaft or which can be a combination of flutes or impellers along the shaft to impart motion to the liquid so that gas in a head space above the liquid is exposed to the liquid and mixing occurs.

A basic form of stirred tank reactor generally has a radial impeller at one end of a shaft with the radial impeller submerged deeply into the liquid. The free end of shaft usually projects above the liquid where it is connected to a motor for rotation the motor being either inside or outside of the reactor. In order to successfully operate a gas/liquid chemical reaction process in a stirred tank reactor with an agitator, the gas and liquid phases must have intimate contact. One way to achieve this is the use of sparge rings wherein the gas is introduced into the liquid at a level below the impeller through a porous ring or porous tube. In addition to the use of the sparge ring stationary draft tubes which shroud the agitator impeller or the use of partially hollow agitator shafts have been used. The stationary draft tube and hollow agitator shaft devices are open at a location above or slightly below the liquid level and at the bottom, near or around the impeller to allow a continuous path or channel for gas and liquid to mix. The energy which drives these devices is the rotation of the impeller which creates a low pressure zone and draws the gases from the head space of the reaction vessel down the draft tube or down the hollow shaft exiting at or near the impeller which shears, disperses and contacts the two phases. A number of engineering variables are key when designing such devices including the height of the liquid level, the design of the impeller and the rotation rate. Each reactor must be properly engineered to assure that the gas/liquid mixing occurs. For example, if the agitation rate is too low, the impeller too small, or the height of the liquid above the impeller too high, than neither of these devices will be ineffective.

U.S. Patent No. 4,919,849 discloses and claims a stirred tank reactor in which a partially hollow shaft in combination with helical impellers and a radially flow impeller in combination with a draft tube are used to cause mixing of gas in the head space above the liquid with the liquid contained in the reactor. The '849 patent introduces gas drawn down through the hollow portion of the shaft at a level above or just below the top of a helical impeller contained on the shaft.

Another method for enhancing gas liquid mixing in a chemical reactor is the use of the shrouded or draft tube that is partially submerged the liquid. Examples of such devices are shown in U.S. Patents 5,004,571; 5,009,816; and 5,108,662.

The hollow shaft agitator devices and the draft tube devices are usually built into a reactor when it is originally designed. However, often it is desired to use an existing chemical reactor for a gas/liquid reaction process. It could also be that the reactor being used for gas/liquid processes utilizes a standard solid agitator shaft and impeller with a gas sparge ring to disperse the gas and it is desired to improve the gas/liquid mixing inexpensively and with a minimum of mechanical modifications to the reactor.

Modifications of existing chemical reactors to use the shrouded draft tube or the hollow agitator can be very expensive and cumbersome. If there is an attempt to replace an existing agitator system with these devices, the impeller or agitation rates may be too small to work properly. This would require extensive re-engineering of the motor and the gear box and the agitator systems which again is time consuming and expensive.

BRIEF SUMMARY OF THE INVENTION

In order to avoid problems of the prior art devices, and to provide a method and apparatus for improving the gas/liquid mixing in a stirred tank reactor, it has been discovered that at least one L-shaped tube can be attached to the shaft containing the impeller in a stirred tank reactor. The L-shaped tube is fixed to the shaft with the vertical portion extending above the level of the liquid and the bottom or foot portion of the L, extending radially outward from the shaft adjacent to or between impeller blades. The foot-portion of the L-shaped tube can extend beyond the periphery of the impeller blades. Upon rotation of the shaft, gas is drawn from the head space in the reactor down through the vertical portion of the L-shaped tube and exits through the end of the base or foot of the L-shaped tube where it can be intimately mixed with the liquid. A plurality of tubes can be equally spaced around the shaft and the tubes can end in nozzle openings, a series of small holes or have a porous device to further enhance mixing of the gas and the liquid.

BRIEF DESCRIPTION OF THE DRAWINGS

Figure 1 is an isometric drawing of a turbine impeller having the apparatus of the present invention.

Figure 2 is a view taken along the lines 2-2 of Figure 1.

Figure 3 is a plan view of a mounting bracket according to the present invention.

Figure 4 is a vertical section through a stirred tank reactor with the device of the present invention.

Figure 5 is a plot of reaction rate against reaction time comparing processes of the prior art and of the invention.

## DETAILED DESCRIPTION OF THE INVENTION

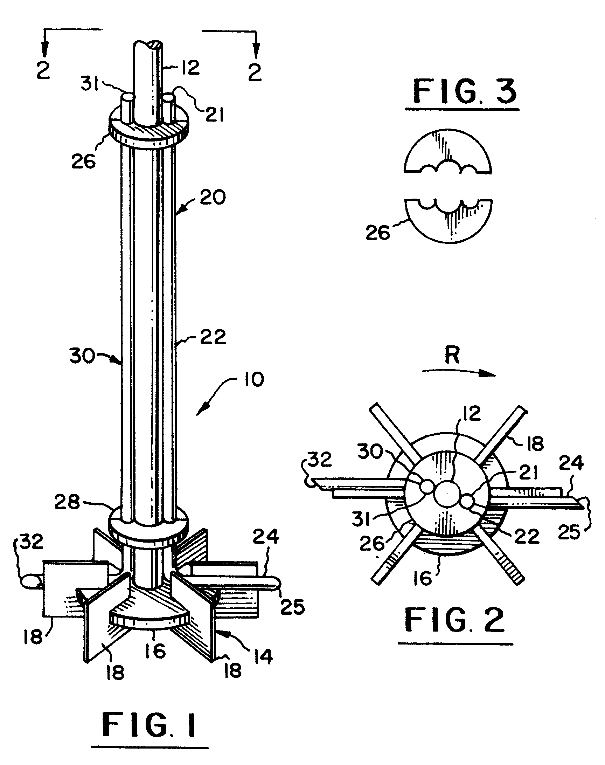

Referring to Figure 1, a conventional turbine impeller assembly according to the present invention is shown generally as 10. The conventional turbine impeller consists of a solid impeller shaft 12 and a turbine impeller 14 generally disposed at one end of the shaft 12. Turbine impeller 14 can be configured in various ways such as shown in the drawing consisting of a bottom plate 16 and a plurality of vanes or blades 18. The impeller 14 can be mounted at the bottom of the shaft via any fastening means such as welding, bolting and the like, as is well known in the art.

According to the present invention, at least one L-shaped draft tube 20 having a vertical section 22 and a bottom or foot section 24 is fixed to the shaft by any convenient fastening devices such as collars or split mounting brackets one of which is shown as 26 in Figure 3. For ease in assuring balance of the shaft, it is convenient to have two L-shaped draft tubes 20 and 30 which are identical in size and shape mounted on diametrically opposed sides of the impeller shaft 12. As shown in Figures 2 and 3, the L-shaped draft tubes 20 and 30 are positioned using split-collars 26 and 28. The split collars or brackets 26,28 can be held with set screws or can be welded or otherwise bonded together to fix the L-shaped draft tubes 20, 30 to the impeller shaft 12. The L-shaped draft tubes are constructed so that the bottom or foot portion 24 of the L can extend outwardly in a radial direction from the shaft 12 parallel to or coextensive with the vanes 18. The discharge end 25 of bottom portion 24 of tube 20 can extend beyond the vanes 18. The discharge end 25 of bottom portion 24 L-shaped draft tube 20 can terminate in a reduced section or nozzle to control the size of the gas bubbles emanating from the tube. It is also possible to close the end of tube 25 and have a plurality of small holes along the end of foot portion 24 to introduce gas into the liquid. A preferable shape for the discharge ends 25,32 is achieved by cutting of the end of each tube at an acute angle as shown in Figure 2 so that the longer edge of the tube outlet is the leading edge as the tube rotates, the direction of rotation being shown by the curved arrow R. It is also possible to use a porous plug to close end 25 of bottom portion 24 to further disperse the gas as it exits the tube. The vertical portion 22 of tube 20 is of a length so that it projects above the liquid in the reactor as will be more fully explained below.

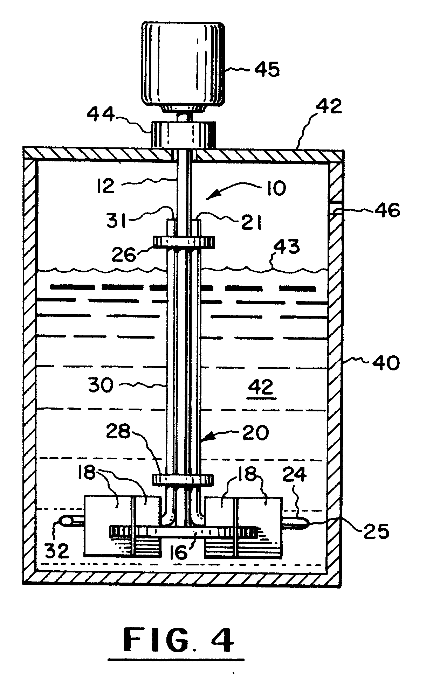

Referring to Figure 4, there is shown a reactor 40 having disposed therein a liquid 42. The liquid level 43 is such that there is a head space 44 above the liquid. The impeller assembly 10 is mounted in the reactor so that the impeller 14 is positioned deeply within the liquid 42. Impeller shaft 12 projects above a top 42 of vessel 40 to an optional intermediate gear box 44 which in turn is connected to a motor 45. Motor 45 is adapted to rotate shaft 12 in accord with the requirement of the gas/liquid reaction. Gas can be introduced into the head space 44 of reactor 40 through one or more ports 46 as is well known in the art.

The motor and gear arrangement 44, 45 can be any system conventionally used with a stirred tank type reactor.

L-shaped tubes 20 and 30 are positioned so that the discharge or bottom end 25, 32 of the tubes are in the liquid. A first or entry end 21, 31 of tubes 20, 30 respectively, projects above the level of the liquid 43. In view of the fact the tubes 20, 30 are fixed to the impeller shaft 12, as the impeller shaft 12 rotates, gas contained in the head space 44 is drawn into the entry ends 21, 31 of tubes 20, 30 and is forced outwardly through the discharge ends 25, 32 to intimately mix with the liquid which is put in motion by the radially vanes 18 of the impeller 14.

Use of the L-shaped draft tubes according to the present invention facilitates rapid and inexpensive retrofitting of an existing turbine impeller in a stirred tank reactor to promote intimate mixing of a gas and a liquid.

In order to achieve gas flow through the L-shape tubes, the Froude number must exceed 0.2 which is determined by the following equation:

$$\frac{N^2 L^2}{gH} > 0.2$$

N = rotation rate (rotation/time)
L = 2x the length of tube from center of agitator rotation axis to gas outlet
g = gravitational constant
H = height of liquid above L-shaped tube outlet

Increasing the rotation rate increases the pressure drop and gas is drawn down the tubes and into the liquid at the impeller where it is dispersed. The length of the gas outlet end of the L-shaped tube can be lengthened or shortened to modify the Froude number and alter the gas pumping performance (to match existing agitator rotation rate).

As stated above, the method and apparatus of the invention can be changed by modifying the submerged outlet of the L-shaped tubes. For example, a sintered metal cap can be added to improve bubble formation. Tapers or restrictions can also be added to modify flow and gas induction as well as the use of a capped outlet and a plurality of holes in the outlet tube. The method and apparatus of the present invention will not put a burden on agitated power requirements. In point of fact, adding a dispersed gas phase at the impeller will actually decrease the agitated power requirements.

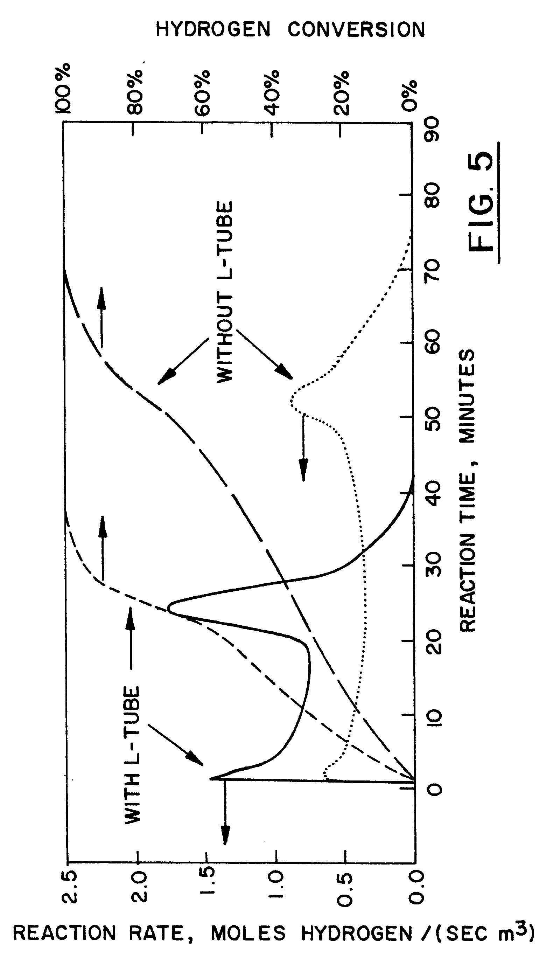

In order to illustrate the effectiveness of the present invention, a 1.8 liter high pressure type 316 stainless steel reactor (Metler RC 1 reactor calorimeter) was filled with 900 grams of isopropanol and 100 grams of nitrobenzene. The mixture was heated to 120 °C and maintained at temperature throughout the reaction. Hydrogen gas was added above the liquid level and the head of the reactor maintained at 12 bar gauge pressure using an automated pressure control. Both the uptake of hydrogen from a ballast tank and the exotherm generated by the hydrogenation of nitrobenzene to aniline were monitored and recorded. The agitator consisted of a standard six blade Rushton turbine impeller with a diameter of 5cm operated at 1000 RPM. The reaction was initiated by adding, under pressure, a 1.0 gram charge of sponge nickel catalyst sold by Activated Metals under the designation A5080. When the catalyst was added, the reaction began almost immediately. The end of reaction was noted when the exotherm and the hydrogen uptake ceased. The reaction using the Rushton turbine alone was completed in 77 minutes. This is shown in the plot of Figure 5 in the lower curve identified as "without L-tube". The upper curve identified as "without L-tube" shows the percent conversion of the hydrogen.

The foregoing example was repeated with the exception that two L-shaped tubes having bottom or foot portions extending 3cm from the center of the agitator axis of rotation past the edge of the Rushton impeller blades were used. The Froude number calculated according to the above equation was 0.64 for this experiment. The reaction rate was higher throughout the reaction compared to the agitator without the L-shaped tubes and was complete in 43 minutes as shown in the plot of Figure 5 for the curves identified as "with L- tube" for both reaction time and hydrogen conversion. The tubes used in the second run were fabricated from type 316 stainless steel tubing having a diameter of 3.2 mm and a vertical section length of 20 cm.

It is also possible that a turbine impeller can be fabricated with the impeller shaft extruded into a shape that would in cross-section appear similar to the shaft 12 and tubes 22 and 30 shown in Figure 2. The foot portion of the tubes would be separate tubes fixed to the bottom portion of the vertical draft tubes after the impeller is fabricated by conventional methods.

It is also possible to have an impeller shaft that is hollow at least from a location above the level of the liquid to a location near the bottom of the shaft so that tubes can be fitted to the shaft to form the base of the L-shaped draft tube. Gas could be introduced to the hollow shaft via a series of holes in the shaft which communicate with the head space above the liquid and the interior hollow portion of the shaft. The shaft would in essence be capped at both ends and the hollow portion would in essence replicate the vertical portion of the L-shaped draft tube.

Having thus described my invention what it desired to be secured by letters patent of the United States is set forth in the appended claims.

## Claims

1. An agitator for use in a stirred tank reactor used to mix a liquid contained in said reactor with gases introduced into a head above said liquid in said reactor comprising in combination:

   a generally cylindrical shaft adapted to extended along a vertical axis of said reactor said shaft having a first end with a radial flow impeller adapted to be disposed in said liquid and a second end projecting above said liquid into said head space of said reactor said shaft adapted to be rotated whereby said impeller imparts motion to said liquid, and at least one generally L-shaped tube having a bottom-section and a vertical section disposed at right angles to one another, said L-shaped tube fixed to said shaft so that said bottom section of said L-shaped tube is disposed generally perpendicular to said shaft and extends to a location proximate a peripheral edge of said impeller, and said vertical section extends above said liquid, whereby said L-shaped tube rotates with said shaft and draws gas through said tube from said head space to be mixed with said fluid.

2. An agitator according to claim 1 wherein there is more than one L-shaped tube disposed around said shaft.

3. An agitator according to claim 1 wherein there are two L-shaped agitator disposed 180° apart on said shaft.

4. An agitator according to claim 1 wherein there are at least three L-shaped tubes disposed equally around said shaft.

5. An agitator according to claim 1 wherein said bottom portion of said L-shaped tube ends in a flow restrictor to control gas induction into said liquid.

6. An agitator according to claim 1 wherein said bottom portion of said L-shaped tube ends in a tapered or eliptical shaped opening.

7. An agitator according to claim 1 wherein said bottom portion of said L-shaped tube ends in a device to enhance gas bubble formation.

8. An agitator according to claim 6 wherein said device to improve gas bubbles formation is a porous metal caps.

9. An agitator according to claim 6 wherein said bottom portion of said L-shaped tube ends in a plurality of small apertures.

10. An agitator according to claim 1 wherein said L-shaped tube is attached to said shaft by removable clamps.

11. An agitator according to claim 1 wherein said L-shaped tube is bonded to said shaft at one or more locations along a vertical portion of the L-shape.

12. An agitator according to claim 11 wherein said bonding is by an adhesive.

13. An agitator according to claim 11 wherein said bonding is by welding.

14. An agitator according to claim 1 wherein said vertical portion of said L-shaped tube is formed as an integral part of said shaft and a horizontal portion of said L-shaped tube is a tube fixed at right angles in fluid tight relation to said vertical portion.

15. A method for increasing the effectiveness of dispersion of a gas contained in a head space above the liquid contained in a stirred tank reactor having an impeller containing an agitator on a shaft adapted to impart motion to said liquid comprising the steps of:

   installing at least one generally L-shaped tube having a bottom section terminating in an orifice end and a vertical section terminating in an entry end disposed at right angles to one another on said shaft with said bottom portion of said generally L-shaped tube disposed to extend proximate a peripheral edge of said agitator and said vertical section of said L-shaped tube fixed to said shaft and projecting above said liquid; and

   rotating said shaft and said L-shaped tube at a speed sufficient to induce flow of gas from said head space through said entry end and out said orifice end of said L-shaped tube.

16. A method according to claim 15 wherein said shaft is rotated at a speed to satisfy the relationship:

$$\frac{N^2 L^2}{gH} > 0.2$$

   wherein N= rotation rate, L = 2x the length of said L-shaped tube from a point at a center of rotation of said agitator to said outlet orifice, g = gravitational constant and H = height of liquid above the outlet orifice of said L-shaped tube.

17. An agitator for use in a stirred tube reactor used to mix a liquid contained in said reactor with gases introduced into a head space above said liquid in said reactor comprising a generally cylindrical shaft adapted to extend along a vertical axis of said reactor, said shaft having a first end with a radial flow impeller adapted to be disposed in said liquid and a second end projecting above said liquid into said head space of said reactor, said shaft adapted to be rotated whereby said impeller imparts motion to said liquid;

   a closed cylindrical passage in said shaft extending from a location proximate said first end of said shaft to a location proximate said second end of said shaft above said liquid;

   at least one inlet passage having an axis disposed at a generally right angle to said shaft said inlet passage communicating with said cylindrical passage and aid head space in said reactor; and

   at least one outlet passage having an axis disposed at a generally right angle to said shaft said outlet passage communicating with said elongated passage and said liquid proximate said impeller.

18. An agitator according to claim 16 wherein said agitator has a plurality of inlet and outlet passages.

19. An agitator according to claim 16 wherein said outlet passage contains a gas permeable member.

20. An agitator according to claim 18 wherein said gas permeable member is a porous plug.

21. An agitator according to claim 15 wherein said outlet passage contains a tube or nozzle extending along said impeller.

FIG. I

FIG. 2

FIG. 3

**FIG. 4**

FIG. 5

# EUROPEAN SEARCH REPORT

**European Patent Office**

**Application Number**

EP 96 11 1448

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-U-92 01 820 (G.KIRSCHEMANN)<br>* claims; figure 1 *<br>--- | 1-21 | B01F3/04<br>B01F15/00<br>B01J19/18 |
| A | EP-A-0 516 921 (STELZER RÜHRTECHNIK)<br>* claims; figures *<br>--- | 1-21 | |
| A | DE-A-25 44 204 (BAYER AG)<br>* claims; figures *<br>--- | 1-14,16 | |
| A | US-A-5 160 459 (CL.GUARNASCHELLI ET AL)<br>* claims; figures *<br>--- | 1,17 | |
| A | DE-A-29 33 784 (SUMA)<br>* claims; figure 2 *<br>--- | 1,17 | |
| A | EP-A-0 403 091 (IMPERIAL CHEMICAL INDUSTRIES)<br>* figure 2 *<br>----- | 1,17 | |
| | | | **TECHNICAL FIELDS SEARCHED (Int.Cl.6)**<br><br>B01F<br>B01J |

The present search report has been drawn up for all claims

| Place of search | Date of completion of the search | Examiner |
|---|---|---|
| BERLIN | 29 October 1996 | Cordero Alvarez, M |